# EUROPÄISCHE PATENTSCHRIFT

(11) **EP 2 166 261 B1**
(45) Veröffentlichungstag und Bekanntmachung des Hinweises auf die Patenterteilung: **17.08.2016**
(21) Anmeldenummer: 09168820.0
(22) Anmeldetag: 27.08.2009
(51) Int. Cl.: F16K 27/02, F16K 37/00, F16K 31/50

(54) **Absperrarmatur**
Shut-off valve
Soupape d'arrêt

(30) Priorität: 19.09.2008 DE 202008012491 U
(43) Veröffentlichungstag der Anmeldung: 24.03.2010
(73) Patentinhaber: ARI-ARMATUREN ALBERT RICHTER GmbH & Co.KG., 33758 Schloss Holte-Stukenbrock (DE)
(72) Erfinder: Humann, Marco, 33758, Schloß Holte-Stukenbrock (DE)
(74) Vertreter: Dantz, Jan Henning

(56) Entgegenhaltungen:
- FR-A- 836 080
- US-A- 2 261 269
- US-A- 3 425 439
- US-A- 3 662 778

## Beschreibung

Die Erfindung betrifft eine Absperrarmatur, mit einem Gehäuse und einem daran befestigten, einen Bügel zur Lagerung eines Absperrelementes sowie einen Deckel aufweisenden Halter, an dem Anschlussmittel vorgesehen sind zur Befestigung zusätzlicher Komponenten.

Bei insbesondere handbetätigten Absperrarmaturen, z.B. Absperrventilen, ist eine Offen- bzw. Schließstellung üblicherweise durch eine mechanische Anzeige an der Armatur erkennbar.

Für die Überwachung von Anlagen, in denen Absperrarmaturen integriert sind, ist es vielfach erforderlich, die Offen- oder Schließstellung jeweils elektrisch in Prozessleitsysteme einzugeben. Die Erkennung der Schließstellung erfolgt hierbei mittels an der Absperrarmatur angebrachter Positionsschalter oder Sensoren. Zu deren Befestigung werden beispielsweise Haltebleche verwendet, die mittels Verbindungsschrauben, mit denen der Halter am Gehäuse verschraubt ist, gehalten werden, wozu zumindest eine dieser Verbindungsschrauben gelöst werden muss. Eine solche Absperrarmatur ist aus der vorveröffentlichten technischen Zeichnung der Anmelderin mit dem Titel "TI-Endschalter für Handventile" Nr. 0060000016 bekannt.

Dies darf jedoch nur durch autorisiertes Fachpersonal erfolgen und nur, wenn die Absperrarmatur nicht in Funktion, d.h. wenn sie drucklos ist. Nach einer Montage des Halteteiles muss die Absperrarmatur einer Dichtheitsprüfung unterzogen werden.

Naturgemäß ist dies mit einem erheblichen, kostenverursachenden Aufwand verbunden.

Um diesen zu reduzieren, werden an geeigneter Stelle des Bügels nachträglich spangebende Bohrungen eingebracht, zur Durchführung von Befestigungsschrauben, mit denen die entsprechende zusätzliche Komponente am Bügel befestigt wird.

Allerdings ist dies ebenfalls nur mit einem entsprechenden Fertigungsaufwand realisierbar. Ein nachträglicher Anbau von zusätzlichen Komponenten an bereits installierten Absperrarmaturen ist überdies nur unter erschwerten Bedingungen möglich.

In der US 2 261 269 A ist eine Absperrarmatur offenbart, bei der im Bedarfsfall, also wenn eine zusätzliche Komponente montiert werden soll, beispielsweise ein Halteblech an Verbindungsschrauben befestigt werden kann, mit denen ein Flansch an einem Joch des Gehäuses bzw. des Deckels befestigt ist, wodurch ein Dichtungspaket, in dem das Absperrelement geführt ist, gesichert wird.

Der Erfindung liegt die Aufgabe zugrunde, eine Absperrarmatur der gattungsgemäßen Art so weiterzuentwickeln, dass sie einfacher und kostengünstiger herstellbar ist.

Diese Aufgabe wird durch eine Absperrarmatur mit den Merkmalen des Anspruchs 1 gelöst.

Durch diese konstruktive Ausbildung der Absperrarmatur werden sowohl deren Herstellungskosten gesenkt wie auch ihre Verwendungsfähigkeit verbessert.

Dabei wird durch die Erfindung die Voraussetzung geschaffen, um bei Bedarf, ohne zusätzliche Arbeiten, ein Anbauteil, wie einen Schalter oder Sensor, zu montieren.

Darüber hinaus ist ein nachträglicher Anbau der entsprechenden Komponente jederzeit problemlos an eine bereits installierte Absperrarmatur möglich, ohne hierfür beispielsweise separate Bohrungen einzubringen bzw. ohne Befestigungsschrauben zu lösen, mit den sich daraus ergebenden beschriebenen Problemen.

Auch ein Austausch der jeweiligen Komponente kann ohne weiteres jederzeit erfolgen.

Nach einer vorteilhaften Weiterbildung der Erfindung sind die Löcher in einer spiegelsymmetrischen Anordnung, bezogen auf die Längsachse des Bügels, angeordnet, so dass die Komponente, je nach Bedarf, rechts- oder linksseitig befestigt werden kann.

Bevorzugt wird der Halter im Feingussverfahren hergestellt, das geringe maßliche Toleranzen ermöglicht, so dass eine relativ maßgenaue Positionierung der Komponenten problemlos möglich ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine erfindungsgemäße Absperrarmatur in einer perspektivischen Ansicht
- Figur 2: einen Teilausschnitt der Absperrarmatur, in einer Vorderansicht.

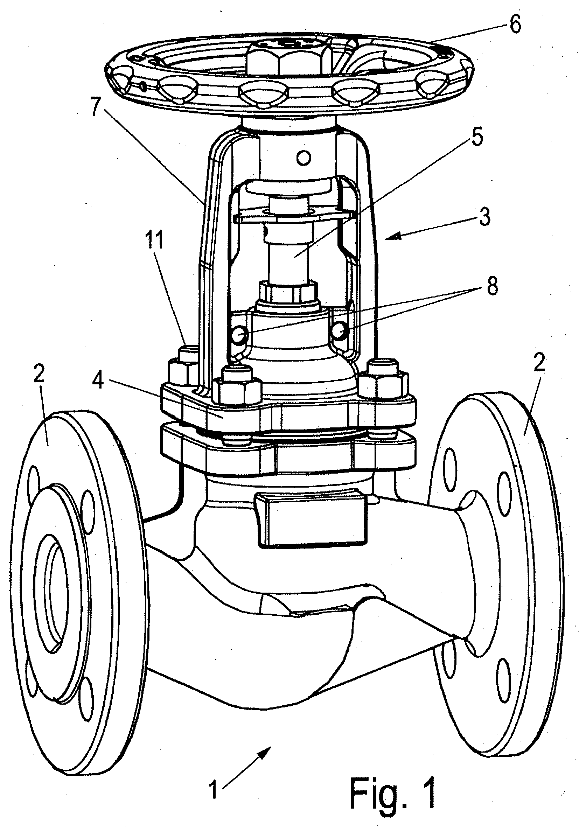

In der Figur 1 ist eine Absperrarmatur dargestellt, mit einem Gehäuse 1, das endseitig durch jeweils einen Flansch 2 begrenzt ist, mit dem die Absperrarmatur in einer Rohrleitung befestigbar ist.

An dem Gehäuse ist ein Halter 3 befestigt, der einen Bügel 7 zur Lagerung eines Absperrelementes 5 in Form einer steigenden Spindel aufweist, die über ein Handrad 6 betätigbar ist.

An den Bügel 7 schließt sich ein Deckel 4 an, der der Befestigung des Halters 3 am Gehäuse 1 dient, wozu Befestigungsschrauben 11 vorgesehen sind.

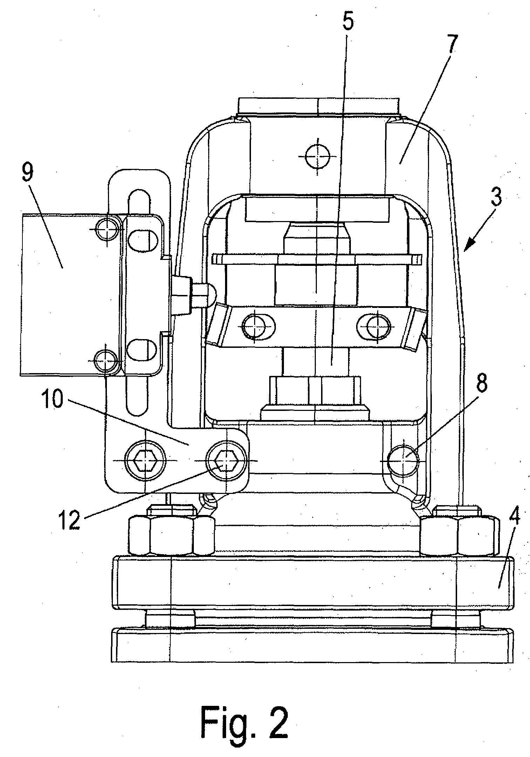

Erfindungsgemäß ist der Halter 3 als Gussteil ausgebildet mit beim Gießen eingebrachten Löchern 8, die jeweils der Aufnahme einer Befestigungsschraube dienen, mit der eine Komponente 9 (Figur 2), im Beispiel in Form eines Endschalters, befestigt werden kann.

Die Löcher 8 sind beidseitig des Absperrelementes 5 und zwar spiegelsymmetrisch zu dessen Längsachse angeordnet. Somit kann die Komponente 9 alternativ rechtsoder linksseitig am Halter 3 befestigt werden, wozu im Übrigen ein Halteblech 10 mit der Komponente 9 verbunden ist, durch das eine eines der Löcher 8 durchtretende Befestigungsschraube 12 führbar ist.

## Patentansprüche

1. Absperrarmatur mit einem Gehäuse (1) und einem daran befestigten, einen Bügel (7) zur Lagerung eines Absperrelementes (5) sowie einen Deckel (4) aufweisenden Halter (3), an dem Anschlussmittel vorgesehen sind zur Befestigung einer zusätzlichen Komponente (9), wobei der Halter (3) als Gussteil ausgebildet ist mit beim Gießen eingebrachten Löchern (8) als Anschlussmittel, **dadurch gekennzeichnet, dass** die Löcher (8) außerhalb des Deckels (4) im Bereich des Bügels (7) vorgesehen sind.

2. Absperrarmatur nach Anspruch 1, **dadurch gekennzeichnet, dass** der Halter (3) als Feingussteil ausgebildet ist.

3. Absperrarmatur nach Anspruch 1 oder 2, **dadurch gekennzeichnet, dass** die Löcher (8) spiegelsymmetrisch zur Längsache des Halters (3) bzw. des Bügels (7) angeordnet sind.

## Claims

1. A shut-off valve, comprising a housing (1) and a holder (3) fastened to said housing and comprising a bracket (7) for mounting a shut-off element (5) and a cover (4), on which connecting means are provided for fastening an additional component (9), wherein the holder (3) is formed as a cast part with holes (8) introduced during casting as a connecting means, **characterized in that** the holes (8) are provided outside of the cover (4) in the region of the bracket (7).

2. A shut-off valve according to claim 1, **characterized in that** the holder (3) is formed as a precision-cast part.

3. A shut-off valve according to claim 1 or 2, **characterized in that** the holes (8) are arranged in a mirror-symmetrical manner in relation to the longitudinal axis of the holder (3) or the bracket (7).

## Revendications

1. Vanne d'isolement avec un corps (1) et un support (3) fixé à celui-ci et présentant un étrier (7) destiné à supporter un élément d'isolement (5) ainsi qu'un couvercle (4), sur lequel des moyens de raccordement sont prévus pour fixer un composant supplémentaire (9), dans laquelle le support (3) est conformé comme une pièce en fonte avec des trous (8) formés lors de la coulée servant de moyens de raccordement, **caractérisée en ce que** les trous (8) sont prévus à l'extérieur du couvercle (4) au niveau de l'étrier (7).

2. Vanne d'isolement selon la revendication 1, **caractérisée en ce que** le support (3) est conformé comme une pièce coulée de précision.

3. Vanne d'isolement selon la revendication 1 ou 2, **caractérisée en ce que** les trous (8) sont disposés de façon symétrique en miroir par rapport à l'axe longitudinal du support (3) ou de l'étrier (7).
